# EUROPEAN PATENT SPECIFICATION

(11) **EP 1 059 031 B1**
(45) Date of publication and mention of the grant of the patent: **08.09.2004**
(21) Application number: 00112251.4
(22) Date of filing: 07.06.2000
(51) Int. Cl.: A01M 23/00, A01M 23/04

(54) **Method for signalling the presence of preys in traps for vermin and device for carrying out this method**
Verfahren zur Signalisierung der Anwesenheit von Beute in Ungetiertfallen und Vorrichtung zur Durchführung des Verfahrens
Méthode pour signaler la présence de proies dans des pièges à vermine et appareil pour sa mise en oeuvre

(30) Priority: 08.06.1999 IT PI990032
(43) Date of publication of application: 13.12.2000
(73) Proprietor: Cristofori, Gilberto, 40125 Bologna (BO) (IT); Gianchecchi, Ugo, 56021 Cascina (PI) (IT)
(72) Inventor: Cristofori, Gilberto, 40125 Bologna (BO) (IT); Gianchecchi, Ugo, 56021 Cascina (PI) (IT)
(74) Representative: Celestino, Marco

(56) References cited:
- GB-A- 2 293 956
- US-A- 5 184 416
- US-A- 5 477 635

## Description

The present invention relates to the field of disinfesting and more precisely it relates to a signalling method for signalling the presence of preys in traps for vermin.

Furthermore the invention relates to a device for determining the presence of preys in traps with means for signalling the presence of preys therein.

### Background of the invention

The problem of disinfesting places associated to human activities to free them of vermin is always felt in dwellings, both in the country and in towns, as well as in factories.

Infestation of rodents, such as for example mice or rats, is frequent and annoying for dwellings, but it can in particular be detrimental for companies that deal with food or other consumer goods.

In fact regulations (UNI, ISO, EN) on safety and hygiene, to which manufacture and business concerns are bound, are strict in particular concerning working environment quality.

The quality of products and services provided by concerns are verified by certification authorities, according to severe international standards, and this obliges to investments to fulfil these requirements.

Many systems are known for the elimination of small rodents, such as for example mice, which are based on a baited traps. For example the following means are known for catching or eliminating them: poisonous feed, glues that stick to the animal, snap reacting traps and box shaped traps into which rodents can enter through one way passages.

Methods that provide poisonous substances cannot be used in places where foodstuff is on sale or stored because the vermin could contaminate it before dieing.

Snap operating traps have the drawback that they can capture only a single animal at a time and the mechanism can easily be recognised by mice. Furthermore, they cannot be used in public places.

Box shaped traps, on the contrary, have the advantage that they can capture many vermin at the same time and are hygienic, since such vermin are substantially insulated from the outside.

A problem that limits the application of such box shaped traps is that the traps have to be located in not much accessible places and must then be controlled frequently to check the presence of possible rodents captured therein.

When large rooms are to be disinfested, such as for example stores or supermarkets, many traps located in hidden and dispersed places are used, whereby a frequent periodic check of all the traps is expensive and troublesome. Furthermore, to check the presence of vermin the traps must be opened, and this step has to be carried out by specialised staff, owing to the possible presence of living noxious vermin inside. Finally, a frequent check of the traps disturbs the vermin so that they suspect entering it.

For all these reasons the need is felt of a method for signalling the presence of preys in traps for vermin, such as for example for small rodents and mice, that is practical and not expensive to use, and that allows an easy and quick monitoring of one or several traps at the same time.

Devices are known that make easier the chek of the operation of a trap.

GB2293956 describes an animal trap with an entry port leading to a pivoted rectangular platform resting on a pivot in a biased way. Magnetic catches are attached to each end of the platform so that when an animal enters starting from a set position the platform rotates and the bias is overcome in such a way that the ends are tipped towards the magnets and the catches cooperate to lock the platform in a sprung position. The trap includes an alarm activated by the change from the set to the sprung state. The alarm may be remote sensed. This document does not disclose any embodiments of the alarm and tells only about it in theory. The trap can capture only one animal at a time. In fact, when the magnets lock the platform, further animals cannot enter the trap, since the platform has rotated.

US5477635 discloses a signalling apparatus that indicates when a disposable animal trap has been triggered. The apparatus detects a movement of the bail, indicating that the trap has been triggered. A visual or audible alarm is used to notify the user. This allows the trap to be reset if the bait is lost, or replaced if an animal has been trapped. This trap is of the sprin type, and the prey can be seen easily. The alarm has only the function to signal when the bait has to be put again, or the spring to be reloaded. Only one prey at a time can be captured.

US5184416 discloses a mousetrap apparatus that is arranged to include a plurality of contact bosses mounted fixedly to a mousetrap assembly base, whereupon tripping of the mousetrap bail effects electrical communication between the mousetrap boss members to provide indication of a mousetrap bail in an actuated orientation relative to the mousetrap assembly. Also this trap is of the spring type, and the prey can be seen easily. The alarm has only the function to signal when the bait has to be put again, or the spring to be reloaded. Only one prey at a time can be captured.

These solutions have the object of allowing an user to check whether there is an animal trapped in or to load the traps again. In all the three cases the traps can capture only one prey at a time and the alarm is activated immediately with the movement of the spring, or the rotation of the platform. The alarm may disturb further animals to approach the trap, but this fact is not detrimental for the full success of the operation, since no further animals can be captured.

### Summary of the invention

It is an object of the present invention to provide a method for determining the presence of preys in traps used for capturing vermin, such as for example small rodents, that is practical and not expensive to use and that allows the quick monitoring of each trap or of several traps at the same time.

It is a further object of the invention to allow that in a trap a plurality of vermin that may be present enter the trap before that an operator checks it.

It is another object of the invention to provide a device used for carrying out this method.

These and other objects are achieved by the method for determining the presence of preys in traps according to the present invention, whose characteristic is of providing the steps of:
- automatic detection the presence of the preys in such traps;
- light and/or acoustic and/or remote signalling that at least a prey has been caught
- wherein the step of signalling is be carried out with a predetermined delay time with respect to the step of determining the presence of the preys, so that other vermin are not disturbed and attracted by the trap up to filling it before that the operator checks it directly.

The device used for carrying out this method comprises
- means for automatic detecting the presence of the preys in the traps;
- light and/or acoustic and/or remote means responsive to said means for detecting for signalling that at least a prey has been caught,
wherein the means for signalling comprise a timer that signals that at least a prey has been caught after predetermined delay time.

This device can be mounted advantageously to box-shaped traps that comprise at least a inlet port having, for example, a one way system comprising a tilting platform hinged on a central pin and a tilting wing hinged on a side pin. The platform is operated by vermin entering the trap and causing its progressive rotation; this movement raises the wing that in turn prevents vermin from escaping from the trap and returns the system to the starting position once the prey is in.

In a first embodiment the means for detecting can comprise a push button operated by lowering at least one of the tilting elements above described.

Alternatively also the rotation at the hinge of the tilting elements can be exploited for detecting the entry of the vermin in the trap; in this case the means for detecting can comprise a switch operated by the rotation of at least one of the pins about which such wings are hinged.

A third embodiment of the means for detecting provides the use of one or a plurality of stick or string elements moved by the vermin in the trap. Such elements can be arranged both vertically and horizontally. In the first case an end is connected to the cover of the trap whereas the other is arranged hanging over the bottom, in order to be operated by the movement of the vermin. In the second case an end is connected to the edge of the trap whereas the other is positioned in the center zone, also this at a height that it is moved by the preys.

In a fourth embodiment the means for detecting can comprise a photocell or a sensor of presence arranged in the box body of the trap.

Preferably the means for signalling can comprise both a light and/or sound device, arranged either on the trap or on a remote support. In the first case the connection to the system of detection can be carried out with a electrical cable, whereas in the second, beyond the electrical cable, the use can be provided of a receiver of radio or infrared signals, transmitted by a sender connected to the detection devices.

The device according to the present invention allows the monitoring of several traps at the same time providing signalling systems that can comprise a control board for displaying the presence of the preys in one or a plurality of traps.

### Brief description of the drawings

The invention will be made clearer with the following description of an embodiment thereof, exemplifying but not limitative, with reference to attached drawings wherein:
- figure 1 shows a perspective view of a trap embodying the method for signalling the presence of preys and the device for carrying it out, according to the present invention;
- figures 2A, 2B, 2C show a cross sectional view of the operation of an inlet port of the trap of figure 1, with a diagrammatical view of a possible arrangement of the sensors for detection;
- figure 3 shows an elevational perspective side view of a inlet port of the trap of figure 1, with indication of the possible arrangement of the sensors for detection;
- figure 4 shows a cross sectional view of the possible arrangement of the sensors for detection used for carrying out the method according to the present invention;
- figures 5A, 5B, 5C show a diagrammatical view of the possible links between the system of detection of the presence of preys and the signalling system in the method according to the present invention;
- figures 6A and 6B show the body of an embodiment of the trap according to the invention, with the unit for signalling separable from the block of the trap.

### Description of a preferred embodiment

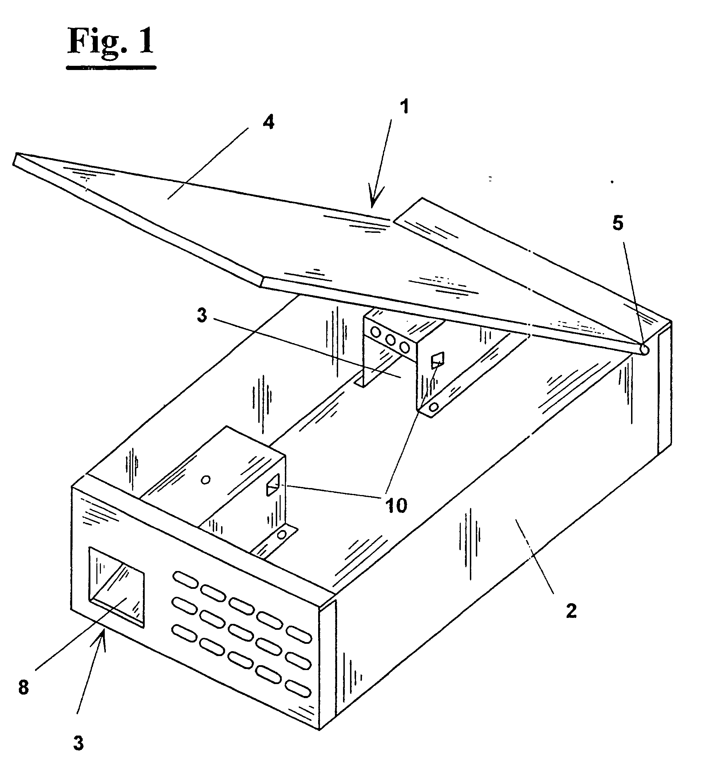

With reference to figure 1, a trap 1, to which the method and the device for detection of preys according to the present invention can be applied, comprises a box-shaped body 2, two inlet ports 3, and a cover 4 hinged to the end on two pins 5 of which only one is shown.

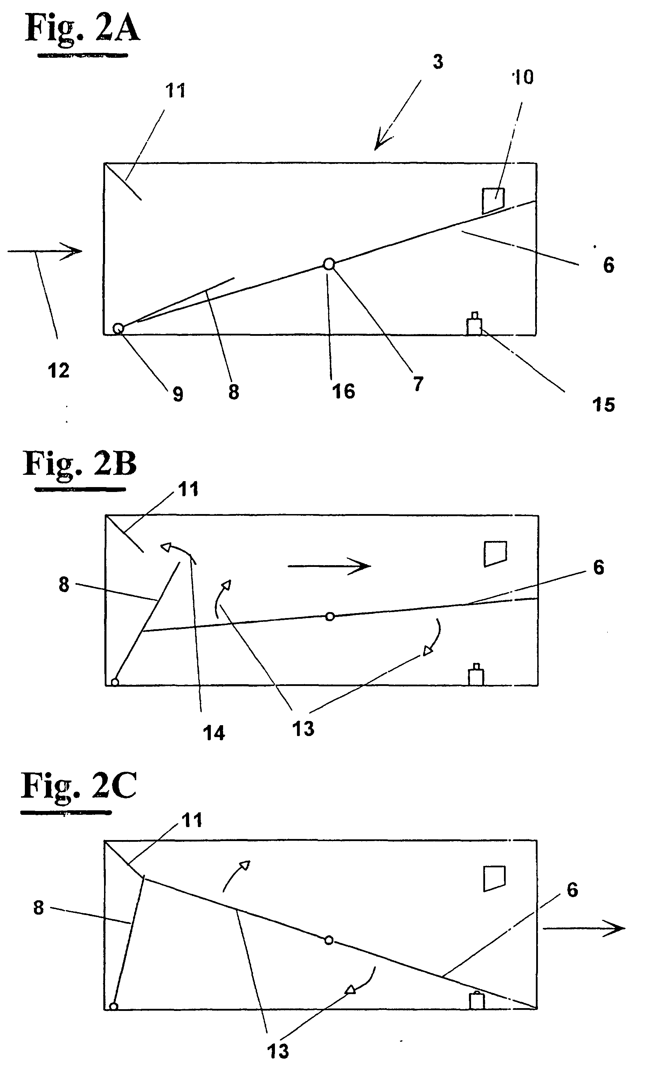

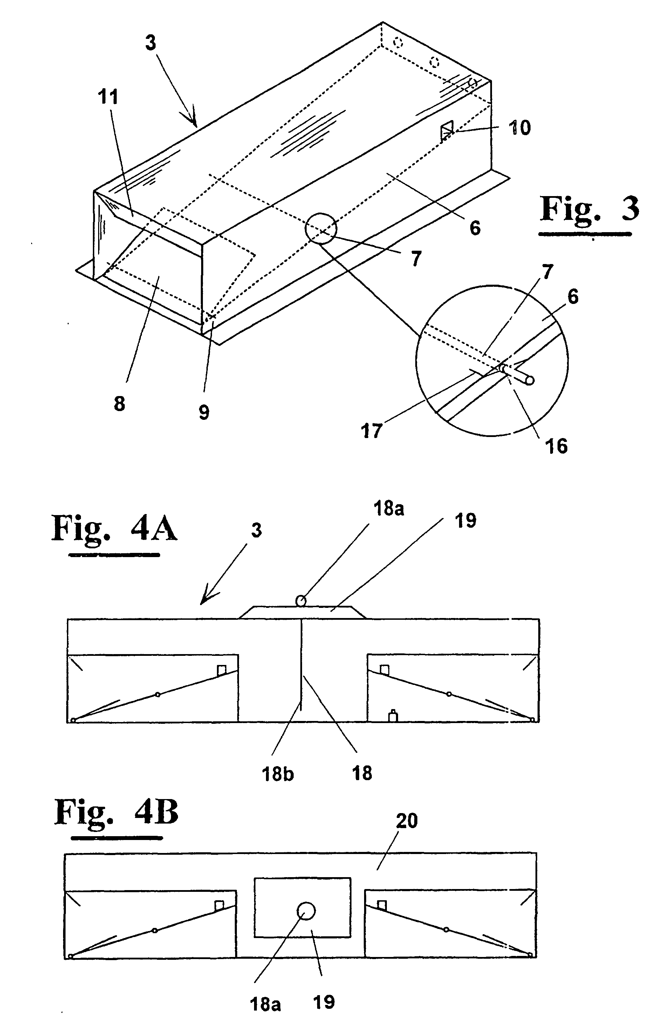

With reference to figures 2A - 2C and 3, the inlet port 3 is equipped with a one way mechanism having a tilting platform 6 hinged on a central pin 7, a tilting wing 8 hinged on a side pin 9, and respective abutments 10 and 11.

In figures 2A-2C the operation of the mechanism is shown diagrammatically: an animal that enters the trap according to direction 12 of figure 2A, once passed central pin 7, causes the rotation 13 of platform 6, raising wing 8 according to arrow 14 up to touch abutment 11.

The animal, then, causes platform 6 to rotate completely, as shown in figure 2C, which returns back to the starting position owing to the weight of the wing after that the animal has passed.

According to a main aspect of the present invention, for signalling the presence of vermin in trap 1 the above mechanism is used by means of push button 15 operated, in this embodiment, by lowering tilting platform 6.

In a second embodiment for detecting the entry of the vermin in the trap the rotation can be exploited of tilting platform or of tilting wings. In this case the means for detecting comprise a switch 16 operated by the rotation of pin 7. What said is valid obviously also for wing 8 and for the corresponding pin 9. In figure 3 the mounting steps are shown of switch 16 by means of two strips 17 that move integrally to wing 7.

With reference to figures 4A and 4B, a third embodiment of the means for detecting provides the use of one or a plurality of elongated elements 18 operated by the movement of the vermin in the trap. Such elements can be arranged both vertically, as in the case in figure 4A, and horizontally, figure 4B.

In the first case (figure 4A) an end 18a is connected to the device 19 located on the cover of the trap containing the means for detection, whereas the other end 18b is arranged hanging over the bottom, in order to be operated by the movement of the vermin.

In the second case (figure 4B) an end 18a is connected to the edge 20 of the trap whereas the other end is positioned in a center zone, also this at a height that it is moved by the movement of the preys.

In a further embodiment of the present invention the means for detecting can comprise a photocell or a sensor of presence arranged in the box body of the trap. This solution is not shown in the figures.

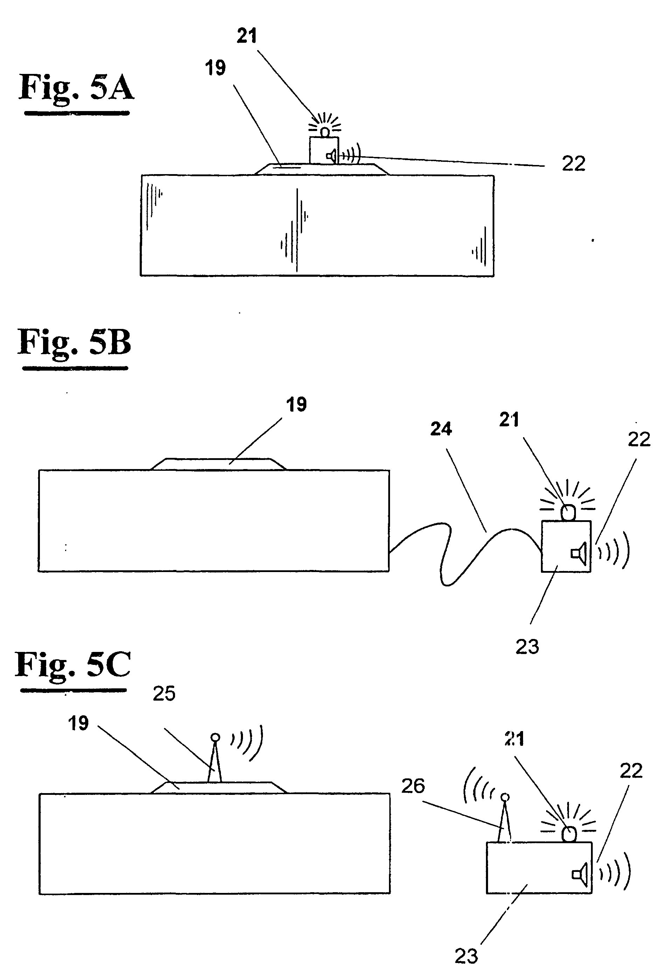

The means for signalling (figure 5A-5C) can comprise both a light device 21 and a sound device 22, arranged either on the trap (figure 5A) or on a remote support 23 (figure 5B-5C). In the second case the connection to the system of detection can be carried out with an electric cable 24, and/or with a receiver of radio or infrared signals 25, transmitted by a sender 26 connected to the detection devices-.

According to a main aspect of the invention the signalling systems can communicate the entry of the preys in the trap with a predetermined delay time, so that other vermin that may be present can enter the trap before the intervention of the operator.

The device, according to a preferred embodiment of the present invention allows the monitoring of several traps at the same time providing a signalling system that can comprise a control board for displaying the presence of the preys in one or a plurality of traps.

Advantageously, the means for signalling are integrated in the trap in sealed housings so that they are not exposed to damage during the washing and disinfecting steps of the box.

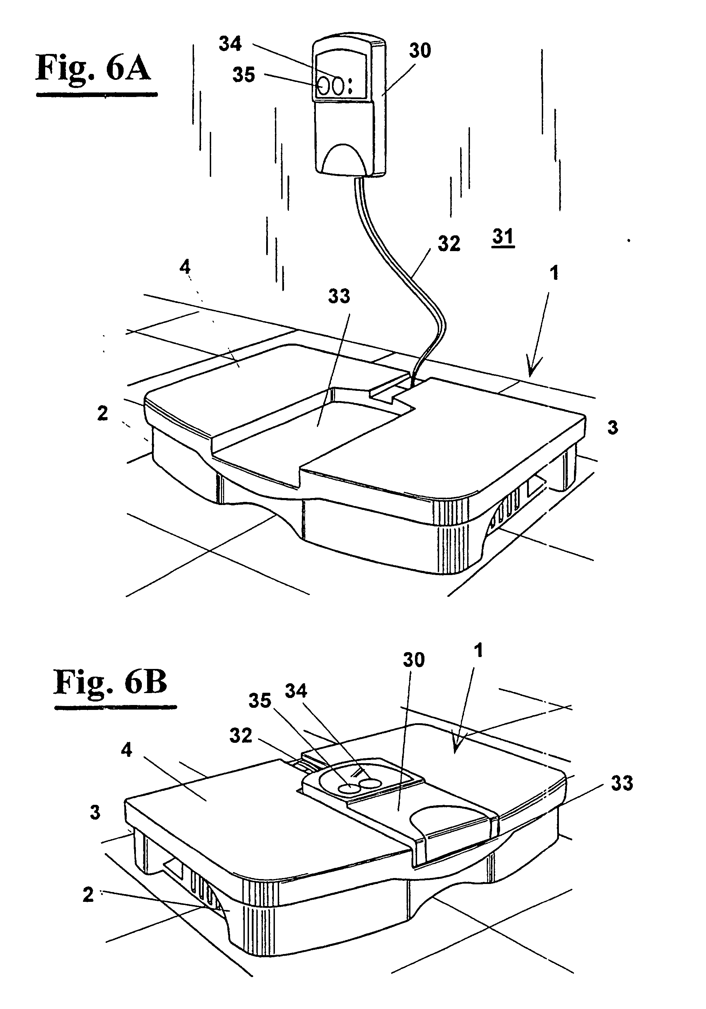

Alternatively, the means for signalling are compact and easily removable, for making easier the washing and disinfecting steps of the box. In the embodiment of figure 6A, in this sense, a signalling unit 30 is shown that can be fixed to a wall 31. A cable 32 connects the signalling unit 30 to the trap 1 wherein the sensor of presence or switch is located. The cover 3 comprises advantageously a housing 33 in which the signalling unit may be accommodated (fig. 6B) to transport the trap or to use the trap 1 compact with the signalling unit 30.

This way when the trap is used in a hidden place, i.e. under a piece of furniture, the signalling unit 30 is fixed like in fig. 6A, whereas when the trap 1 is used in an open space, signalling unit 30 is accommodated in housing 33 like in fig. 6B and separated only when necessary.

Signalling unit 30 may comprise a keyboard for programming an electronic board (not shown). The latter may comprise integrated sound and light means 34 and 35 as well as a transmitter for sending the signal of presence of vermin in the trap to a remote console.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the scope of the invention as defined by the claims. It is to be understood that the phraseology or terminology employed herein is for the purpose of description and not of limitation.

## Claims

1. Method for determining the presence of preys in traps used for capturing vermin, such as for example small rodents,
**characterised in that** it provides the steps of:
- automatic detecting the presence of said preys in said traps;
- light and/or acoustic and/or remote means for signalling that at least a prey has been caught,
wherein said step of light and/or acoustic and/or remote signalling is carried out with a predetermined delay time with respect to said step of determining the presence of said preys.

2. Device for determining the presence of preys in traps used for capturing vermin, such as for example small rodents,
**characterised in that** it comprises
- means for automatic detecting the presence of said preys in said traps;
- means for light and/or acoustic and/or remote signalling that at least a prey has been caught
- wherein said means for signalling comprise a timer that signals that at least a prey has been caught after a predetermined delay time.

3. Device according to claim 3, wherein said traps are box shaped and comprise at least an inlet port equipped with a system that provides a tilting platform on a central pin, operated by vermin entering the traps, and a tilting wing hinged on a side pin, which in turn prevents said vermin from escaping from said trap.

4. Device according to claim 3, wherein said means for determining the presence of said preys comprise a push button or a switch operated by at least one between said tilting platform or said tilting wing.

5. Device according to claim 3, wherein said means for determining the presence of said preys comprise one or a plurality of elongated elements hanging or extending towards the center of the trap and operated by the movement of the vermin in said trap.

6. Device according to claim 3, wherein said means for determining the presence of said preys comprise a photocell or a sensor of presence arranged in the box shaped body of said traps.

7. Device according to claim 3, wherein a means for signalling is provided selected from the group of: a light and/or a sound device and/or a transmitter device, arranged on said trap, connected to said means for detecting by an electrical cable.

8. Device according to claim 3, wherein a remote control board responsive to said means for signalling is provided for displaying the presence of said preys in at least one trap.

9. Device according to claim 4 wherein said means for signalling are compact and said box shaped trap has a cover with a housing where said means for signalling can be accommodated, whereby washing and disinfecting of said box is allowed separately from said means for signalling.

10. Device according to claim 4 wherein said means for signalling comprise a keyboard for programming an electronic board, the latter comprising integrated sound and light means as well as a transmitter for sending the signal of presence of vermin in the trap to a remote console.

## Patentansprüche

1. Verfahren zum Erfassen des Vorhandenseins von Beutetieren in Fallen, die zum Fangen von Ungeziefer wie beispielsweise kleinen Nagern verwendet werden,
**dadurch gekennzeichnet, dass** es die Schritte aufweist:
- selbsttätiges Erfassen der Vorhandenseins von Beutetieren in den Fallen;
- Licht- und/oder Ton- und/oder Fernmeldemittel zum melden, dass wenigstens ein Beutetier gefangen worden ist,
wobei der Schritt des Meldens mittels Licht und/oder Ton und/oder des Fernmeldens mit einer im Voraus festgelegten Verzögerungszeit in Bezug auf den Schritt des Erfassens des Vorhandenseins von Beutetieren ausgeführt wird.

2. Vorrichtung zum Erfassen des Vorhandenseins von Beutetieren in Fallen, die zum Fangen von Ungeziefer wie beispielsweise kleinen Nagern verwendet werden,
**dadurch gekennzeichnet, dass** sie umfasst:
- Mittel zum selbsttätigen Erfassen des Vorhandenseins von Beutetieren in den Fallen;
- Licht- und/oder Ton- und/oder Fernmeldemittel, um zu melden, dass wenigstens ein Beutetier gefangen worden ist,
- wobei die Mittel zum Melden einen Zeitgeber umfassen, der nach einer im Voraus festgelegten Verzögerungszeit meldet, dass wenigstens ein Beutetier gefangen worden ist.

3. Vorrichtung nach Anspruch 3, wobei die Fallen kastenförmig sind und wenigstens eine Einlassöffnung aufweisen, die mit einem System ausgestattet ist, das an einem mittigen Stift eine schwenkbare Plattform vorsieht, die von dem in die Fallen eintretenden Ungeziefer betätigt wird, und einen auf einem seitlichen Stift gelagerten schwenkbaren Flügel vorsieht, der seinerseits verhindert, dass das Ungeziefer aus der Falle entkommt.

4. Vorrichtung nach Anspruch 3, wobei die Mittel zum Erfassen des Vorhandenseins von Beutetieren einen Tastschalter oder einen Schalter umfassen, der von wenigstens einem Teil, der schwenkbaren Plattform oder dem schwenkbaren Flügel, betätigt wird.

5. Vorrichtung nach Anspruch 3, wobei die Mittel zum Erfassen des Vorhandenseins von Beutetieren ein oder mehrere lang gestreckte Elemente umfassen, die hängen oder sich in Richtung der Mitte der Falle erstrecken und durch die Bewegung des Ungeziefers in der Falle betätigt werden.

6. Vorrichtung nach Anspruch 3, wobei die Mittel zum Erfassen des Vorhandenseins von Beutetieren eine Fotozelle oder einen Objektsensor umfassen, die bzw. der in dem kastenförmigen Körper der Fallen angeordnet ist.

7. Vorrichtung nach Anspruch 3, wobei ein Mittel zum Melden vorgesehen ist, das aus der Gruppe aus einer Lichtvorrichtung und/oder einer Schallvorrichtung und/oder einer Sendervorrichtung gewählt ist, und mit den Mitteln zum Erfassen durch ein Stromkabel verbunden auf der Falle angeordnet ist.

8. Vorrichtung nach Anspruch 3, wobei eine Fernüberwachungstafel vorgesehen ist, die auf das Mittel zum Melden reagiert, um das Vorhandensein von Beutetieren in wenigstens einer Falle anzuzeigen.

9. Vorrichtung nach Anspruch 4, wobei die Mittel zum Melden kompakt sind und die kastenförmige Falle eine Abdeckung mit einem Gehäuse besitzt, in dem die Mittel zum Melden untergebracht werden können, wodurch ein Waschen und Desinfizieren des Kastens getrennt von den Mitteln zum Melden möglich ist.

10. Vorrichtung nach Anspruch 4, wobei die Mittel zum Melden ein Tastenfeld für die Programmierung einer elektronischen Steckkarte umfassen, wobei die Letztere sowohl integrierte Schall- und Lichtmittel als auch einen Sender, der die Meldung des Vorhandenseins von Ungeziefer in der Falle an eine entfernte Konsole sendet, umfasst.

## Revendications

1. Procédé pour déterminer la présence de proies dans des pièges utilisés pour capturer de la vermine, telle que, par exemple, de petits rongeurs,
**caractérisé en ce qu'**il met en oeuvre les étapes suivantes :
- la détection automatique de la présence desdites proies dans lesdits pièges;
- la signalisation par des moyens lumineux et/ou des moyens acoustiques et/ou des moyens de signalisation à distance qu'au moins une proie a été attrapée,
dans lequel ladite étape de signalisation lumineuse et/ou de signalisation acoustique et/ou de signalisation à distance est effectuée avec un temps de retard prédéterminé par rapport à ladite étape de détermination de la présence desdites proies.

2. Dispositif pour déterminer la présence de proies dans les pièges utilisés pour capturer de la vermine, telle que, par exemple, de petits rongeurs,
**caractérisé en ce qu'**il comprend
- des moyens pour une détection automatique de la présence desdites proies dans lesdits pièges;
- des moyens de signalisation lumineuse et/ou de signalisation acoustique et/ou de signalisation à distance qu'au moins une proie a été attrapée;
dans lequel lesdits moyens de signalisation comprennent une minuterie qui signale qu'au moins une proie a été attrapée après une période de retard prédéterminée.

3. Dispositif selon la revendication 3, dans lequel lesdits pièges ont la forme d'une boîte et comprennent au moins un orifice d'entrée muni d'un système qui met en oeuvre une plateforme basculante sur une broche centrale actionnée par l'entrée de la vermine dans les pièges et une aile basculante articulée sur une broche latérale qui, à son tour, empêche ladite vermine de s'échapper dudit piège.

4. Dispositif selon la revendication 3, dans lequel lesdits moyens pour déterminer la présence desdites proies comprennent un bouton-poussoir ou un interrupteur actionné par au moins l'un des deux éléments : la plateforme basculante ou l'aile basculante.

5. Dispositif selon la revendication 3, dans lequel lesdits moyens pour déterminer la présence desdites proies comprennent un ou plusieurs éléments allongés pendant ou s'étendant vers le centre du piège et actionnés par le mouvement de la vermine dans ledit piège.

6. Dispositif selon la revendication 3, dans lequel lesdits moyens pour déterminer la présence desdites proies comprennent une cellule photoélectrique ou un capteur de présence aménagé(e) dans le corps en forme de boîte desdits pièges.

7. Dispositif selon la revendication 3, dans lequel il est prévu un moyen de signalisation choisi dans le groupe comprenant un dispositif lumineux et/ou un dispositif sonore et/ou un dispositif émetteur, aménagé sur ledit piège, connecté audit moyen de détection par un câble électrique.

8. Dispositif selon la revendication 3, dans lequel un tableau de commande à distance sensible audits moyens de signalisation est mis en oeuvre pour afficher la présence desdites proies dans au moins un piège.

9. Dispositif selon la revendication 4, dans lequel lesdits moyens de signalisation sont compacts et ledit piège en forme de boîte a un couvercle avec un boîtier dans lequel lesdits moyens de signalisation peuvent être reçus, le lavage et la désinfection de ladite boîte pouvant ainsi se faire séparément desdits moyens de signalisation.

10. Dispositif selon la revendication 4, dans lequel lesdits moyens de signalisation comprennent un clavier pour programmer un tableau électronique, ce dernier comprenant des moyens sonores et des moyens lumineux intégrés ainsi qu'un émetteur pour envoyer le signal de présence de vermine dans le piège à une console éloignée.
